# EUROPÄISCHE PATENTANMELDUNG

(11) **EP 1 072 495 A1**
(43) Veröffentlichungstag der Anmeldung: **31.01.2001**
(21) Anmeldenummer: 00101589.0
(22) Anmeldetag: 27.01.2000
(51) Int. Cl.: B62B 3/16, B65D 19/00

(54) **Rollpalette**

(30) Priorität: 30.07.1999 DE 29913060 U
(71) Anmelder: Beiner, Günter, 32657 Lemgo (DE); Biehl, Waldemar, 59581 Warstein (DE)
(72) Erfinder: Beiner, Günter, 32657 Lemgo (DE); Biehl, Waldemar, 59581 Warstein (DE)
(74) Vertreter: Körner, Ekkehard, Dipl.-Ing.

(57) **Zusammenfassung**

Eine Rollpalette für Lebensmittel- oder Getränkemärkte, bestehend aus einer im wesentlichen rechteckigen Tragplatte und Laufrollen, die im Bereich der Ecken der Tragplatte an deren Unterseite angebracht sind, weist in der Tragplatte zwei Durchbruchpaare auf, die an die Abmessungen und Abstände der Laufrollen und deren Lagerkonsolen so angepaßt sind, daß beim Übereinanderstapeln der Rollpaletten zwei der Laufrollen jeweils durch eines der Durchbruchpaare hindurchgreifen können, so daß ein Stapel errichtet werden kann, in dem die Rollpaletten parallel und stabil übereinander liegen.

## Beschreibung

Die Erfindung bezieht sich auf eine Rollpalette für Lebensmittel- und Getränkemärkte und dgl., bestehend aus einer rechteckigen Tragplatte, vorzugsweise aus Kunststoff, die an ihrem Rand eine sich nach unten erstreckende, umlaufende Wand aufweist, und aus Laufrollen, die im Bereich der Ecken der Tragplatte an deren Unterseite angebracht sind und über die untere Begrenzung der Wand vorstehen.

Rollpaletten der vorgenannten Art sind in aller Regel an ihrer Oberseite mit zwei sich gegenüberstehenden Seitenteilen versehen, die Seitenwände bilden und an der Rollpalette festgesteckt sind. Solche Rollbehälter sind allgemein bekannt und dienen in Supermärkten und Getränkemärkten für den Transport von Waren zwischen dem Lager und den Verkaufsregalen und auch als Transportbehälter für die Belieferung von Supermärkten durch Lastkraftwagen. Die Grundabmessungen der Tragplatten dieser Rollbehälter liegen im allgemeinen im Bereich von 720 x 810 mm.

Rollpaletten dieser Art werden in großen Stückzahlen benötigt. Die Belieferung der Abnehmer vom Herstellerwerk aus bereitet Platzprobleme. Im allgemeinen werden die Rollpaletten und die zugehörigen Seitenteile in gesonderten Einheiten verpackt, um den Platzbedarf zu reduzieren. Die an den Rollpaletten vorhandenen Laufrollen bilden dabei aber noch immer ein besonderes Problem, da sie beim Stapeln hinderlich sind und einen Stapel instabil machen können.

Der Erfindung liegt die Aufgabe zugrunde, eine Rollpalette der eingangs genannten Art anzugeben, die sich platzsparend und standsicher stapeln läßt.

Diese Aufgabe wird durch die im Anspruch 1 angegeben Merkmale gelöst. Vorteilhafte Ausgestaltungen der Erfindung sind Gegenstand der Unteransprüche.

Die Erfindung gibt eine Rollpalette an, die sich in einfacher Weise stapeln läßt, ohne Stabilitäts- oder Gleichgewichtsprobleme aufzuwerfen. Die Tragplatte der Rollpalette weist zwei Durchbruchpaare auf, die so gestaltet und angeordnet sind, daß die Rollpaletten so aufeinander gelegt werden können, daß ausgehend von der untersten, also ersten Rollpalette, das eine Rollenpaar der darauf liegenden, also zweiten Rollpalette, in ein Durchbruchpaar der ersten Rollpalette eingreift, während das andere Rollenpaar der zweiten Rollpalette über den Rand der ersten Rollpalette vorsteht. Die dritte Rollpalette im Stapel, gegenüber der zweiten Rollpalette um 180° gedreht, greift mit ihrem einen Laufrollenpaar durch das zweite Durchbruchpaar der zweiten und ersten Rollpaletten und hängt mit ihrem anderen Laufrollenpaar sowohl über die zweite als auch über die erste Rollpalette über. Die vierte Rollpalette im Stapel, wiederum gegenüber der dritten Rollpalette um 180° gedreht, greift mit ihrem einen Laufrollenpaar durch das zweite Durchbruchpaar der dritten Rollpalette und hängt mit ihrem anderen Rollenpaar über die dritte Rollpalette über und greift dann in das zweite Durchbruchpaar der zweiten Rollpalette. Die fünfte Rollpalette im Stapel entspricht in ihrer Lage wiederum der zweiten Rollpalette, die sechsten und siebenten Rollpaletten entsprechen in ihren Lagen den dritten und vierten Rollpaletten, und die achte Rollpalette entspricht in ihrer Lage wieder den zweiten und fünften Rollpaletten usw..

In dem Stapel aus Rollpaletten liegen somit die Tragplatten flach aufeinander, die Laufrollen verhindern lediglich eine horizontale Verschiebung der Rollpaletten gegeneinander. Sofern die Laufrollen über mehr als die doppelte Höhe einer Tragplatte über deren untere Begrenzung vorstehen, müssen die Rollpaletten an ihrer Oberseite mit entsprechenden Vertiefungen für die Aufnahme des genannten Übermaßes versehen sein, um zu verhindern, daß die Laufrollen im Stapel Last tragen und somit den Stapel insgesamt instabil machen.

Die Tragplatten, vorzugsweise aus Kunststoff gespritzt, sind an ihrer Unterseite vorteilhafterweise mit einer Vielzahl von Aussteifungsrippen versehen. Es kann in diesem Falle günstig sein, die Unterseite der Tragplatte durch eine Abdeckplatte zu verschließen, die wenigstens an der Umfangswand und an die Durchbrüche begrenzenden Wänden abgedichtet befestigt ist und auf diese Weise eine Verschmutzung der durch die Aussteifungsrippen geschaffenen Kammern an der Unterseite der Tragplatte verhindert.

Die Erfindung wird nachfolgend unter Bezugnahme auf ein in den Zeichnungen dargestelltes Ausführungsbeispiel näher erläutert. Es zeigt:
Fig. 1 eine teilweise geschnittene Seitenansicht eines Stapels Rollpaletten mit den Merkmalen der Erfindung und
Fig. 2 eine teilweise geschnittene Ansicht der Tragplatte einer Rollpalette von Fig. 1 von unten.

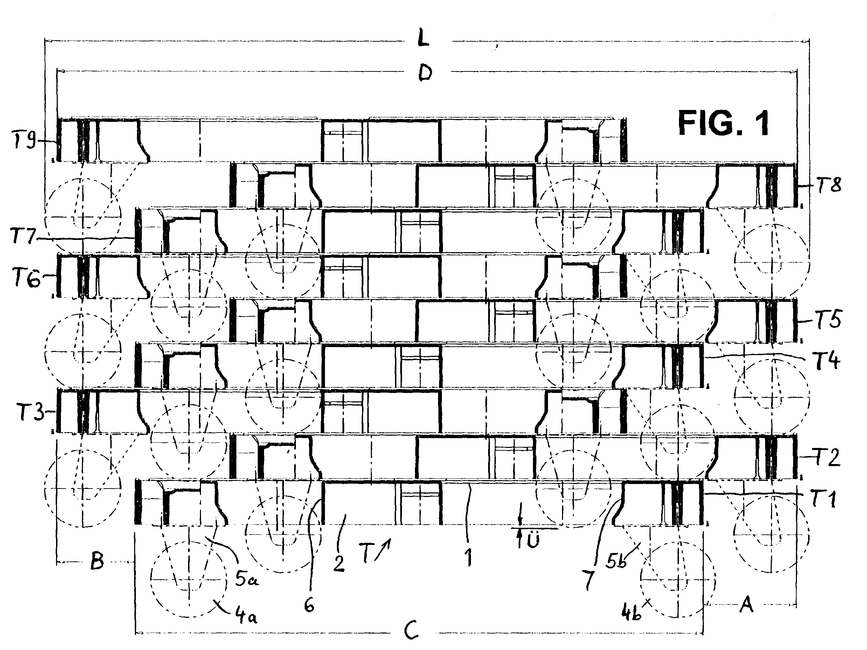

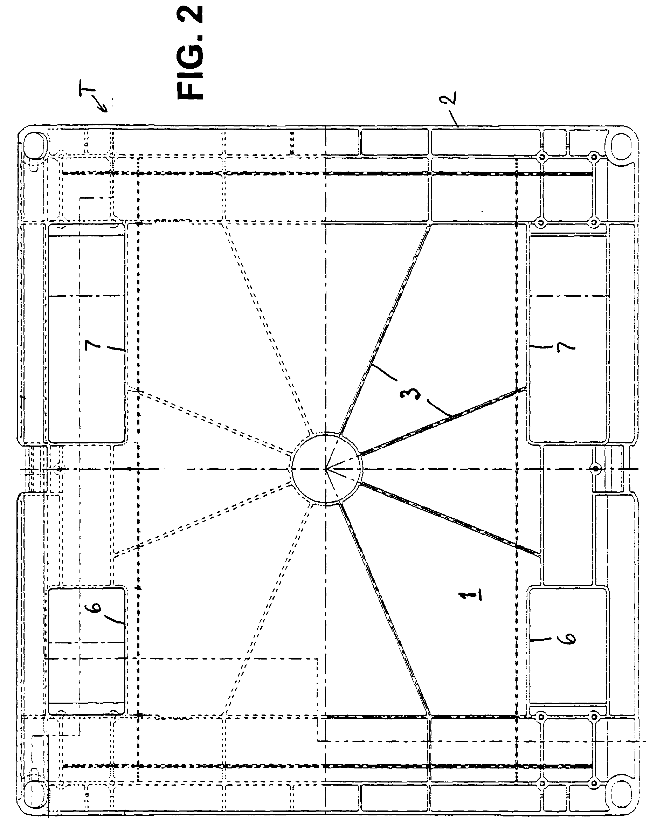

Man erkennt in Fig. 1 mehrere übereinander gestapelte Rollpaletten, die von unten nach oben mit T1 bis T9 durchnumeriert sind. Die Tragplatte T einer Rollpalette besteht jeweils aus einem integral gespritzten Kunststoffteil, umfassend einen Boden 1 und einer sich von dessen Rand nach unten erstreckenden, umlaufenden Wand 2. Der Boden 2 kann weiterhin durch eine Vielzahl von Rippen 3 ausgesteift sein, siehe Fig. 2.

An der Unterseite der Tragplatte T sind vier Laufrollen 4a, 4b in entsprechenden Konsolen 5a bzw. 5b befestigt, von denen die Konsolen 5b lenkbar sind. Die in den Konsolen 5b gelagerten Laufrollen 4b können somit als Lenkrollen bezeichnet werden.

Nahe den festen, d.h. nicht lenkbaren Laufrollen 4a ist in der Tragplatte T jeweils ein erster Durchbruch 6 ausgebildet. Die beiden Durchbrüche 6 des ersten Durchbruchpaares haben einen gegenseitigen Mittenabstand, der der Spurbreite der nicht lenkbaren Laufrollen 4a entspricht. Die Breite der ersten Durchbrüche 6 ist derart gewählt, daß die Laufrollen 4a mit ihrer Konsole 5a in diese Durchbrüche eingeführt werden können. Die Länge der Durchbrüche 6 ist etwas größer als die Querabmessung der Laufrollen 4a mit ihren Konsolen 5a in derselben Meßrichtung, d.h. parallel zur Fläche der Tragplatte T und senkrecht zur Achsrichtung der Laufrollen 4a.

Benachbart dem lenkbaren Laufrollenpaar 4b ist in der Tragplatte T ein zweites Paar Durchbrüche 7 ausgebildet, die ebenfalls einen Mittenabstand aufweisen, der der Spurbreite der Laufrollen 4b entspricht. Die Breite der Durchbrüche 7 ist wiederum so gewählt, daß Laufrollen 4a, 4b mit ihren Konsolen 5a bzw. 5b in die Durchbrüche 7 eingeführt werden können. Die Länge der zweiten Durchbrüche 7 in Längserstreckung der Tragplatte T gesehen ist derart, daß zwei Laufrollen mit ihren Konsolen darin aufgenommen werden können.

Die Lage der ersten Durchbrüche 6 ist derart gewählt, daß beim Übereinanderlegen zweier Rollpaletten in gleicher Richtung das erste Laufrollenpaar 4a der obenliegenden, zweiten Rollpalette T2 in die Durchbrüche 6 der Tragplatte T der unteren, ersten Rollpalette T1 eingreifen kann und das andere Laufrollenpaar 4b der zweiten Rollpalette T2 über das Ende der Tragplatte T der unteren Rollpalette T1 hinausragt, wo deren zweites Laufrollenpaar 4b angebracht ist. Eine dritte Rollpalette T3 ist dann auf die zweite Rollpalette T2 um 180° gedreht aufzulegen, so daß deren erstes Laufrollenpaar 4a durch die zweiten Durchbrüche der Tragplatte der zweiten Rollpalette T2 in den zweiten Durchbruch 7 der Tragplatte T der ersten Rollpalette T1 hineingreift, während deren zweites Laufrollenpaar 4b sowohl über die zweite Rollpalette T2 als auch über die erste Rollpalette T1 überhängt. Eine in gleicher Richtung auf die dritte Rollpalette T3 gelegte vierte Rollpalette T4 greift mit ihrem ersten Rollenpaar 4a durch den zweiten Durchbruch in der Tragplatte T der dritten Rollpalette T3 hindurch und steht über die zweite Rollpalette T2 über, nicht jedoch über die erste Rollpalette T1. Das andere Laufrollenpaar 4b der vierten Rollpalette T4 steht über das benachbarte Ende der dritten Rollpalette T3 über und greift in die zweiten Durchbrüche in der Tragplatte der zweiten Rollpalette T2, die bereits von dem ersten Rollenpaar 4a der dritten Rollpalette T3 durchdrungen sind.

Somit stehen die einzelnen Rollpaletten T2 bis T4 wechselseitig links und rechts über die jeweils darunterliegenden Rollpaletten über. Wenn beispielsweise die Rollpaletten eine Längsabmessung C von 815 mm haben, dann beträgt der Überstand A der zweiten Rollpalette T2 gegenüber der ersten Rollpalette T1 etwa 135 mm, während der Überstand B der dritten Rollpalette T3 gegenüber der ersten Rollpalette T1 auf der gegenüberliegenden Seite etwa 110 mm beträgt. Die Gesamtlänge D über die Tragplatten gemessen beträgt darin 1.060 mm, während die Gesamtlänge L des Stapels, die über die etwas weiter vorstehenden Lenkrollen zu messen ist, etwa 1.095 mm beträgt, je nachdem, wie weit die Lenkrollen 4b vorstehen.

Man erkennt in Fig. 1 ferner, daß die Laufrollen 4a, 4b um ein Übermaß Ü etwas weiter nach unten vorstehen, als die doppelte Höhe der Tragplatten mißt. Um diesem Übermaß Ü Rechnung zu tragen, sind die Böden 1 an ihrer Oberseite wenigstens in dem Bereich, wo die Laufrollen 4a, 4b im Stapel zu liegen kommen, entsprechend vertieft, das ist im Bereich über den Montagestellen der Laufrollenkonsolen 5a, 5b, wie aus Fig. 1 deutlich zu erkennen ist.

Wie erwähnt, kann die Tragplatte T an ihrer Unterseite von einer Abdeckplatte verschlossen sein, was hier allerdings nicht dargestellt ist. Es versteht sich, daß in diesem Falle die Konsolen 5a und 5b an der Außenseite der Abdeckplatte befestigt sind und diese auch die notwendigen Durchbrüche für die Laufrollen haben muß, und sie muß auch an den Wandbegrenzungen der Durchbrüche dicht angebracht sein, um die Dichtungsfunktion gegen ein Verschmutzen des Innenraums der Tragplatte erfüllen zu können.

## Patentansprüche

1. Rollpalette für Lebensmittel- oder Getränkemärkte und dgl., bestehend aus einer im wesentlichen rechteckigen Tragplatte, die an ihrem Rand eine sich nach unten erstreckende, umlaufende Wand aufweist, und aus Laufrollen, die im Bereich der Ecken der Tragplatte an deren Unterseite angebracht sind und über die untere Wandbegrenzung vorstehen, gekennzeichnet durch die folgenden Merkmale:
a) in der Tragplatte (T) sind zwei Durchbruchpaare (6,7) ausgebildet,
b) der Mittenabstand der Durchbrüche (6,7) eines Paares entspricht jeweils der Spurbreite der Laufrollen (4a,4b),
c) die Durchbrüche (6,7) haben eine Breite, die größer ist als die Breite der Laufrollen (4a,4b) und der diese lagernden Konsolen (5a,5b),
d) die Durchbrüche (6) des einen Paares haben eine Länge, die größer ist als die größte Ausdehnung einer ersten Laufrolle (4a) mit Konsole (5a) quer zur Rollenachse und parallel zur Tragplatte (T) und befinden sich an einer gegenüber der Lage eines feststehenden Laufrollenpaares (4a) in Längsrichtung verschobenen Stelle, die es ermöglicht, auf diese erste Rollpalette (T1) eine zweite, gleiche Rollpalette (T2) flach so aufzulegen, daß deren erstes feststehendes Rollenpaar (4a) von dem Durchbruchpaar (6) in der Tragplatte (T) der ersten Rollpalette (T1) aufgenommen wird und das andere, zweite Rollenpaar (4b) jenseits des entfernten Querrandes der Tragplatte (T) der ersten Rollpalette (T1) herabhängt.
e) die Durchbrüche (7) des anderen Paares haben eine Länge, die etwa der Summe der größten Ausdehnung je einer Laufrolle (4a,4b) mit Konsole (5a,5b) aus beiden Laufrollenpaaren, quer zur Laufrollenachse und parallel zur Tragplatte (T) gemessen, entspricht, und befinden sich jeweils an einer gegenüber der Lage des zweiten Laufrollenpaares (4b) in Längsrichtung verschobenen Stelle und beginnen jeweils direkt neben der Montagestelle der Laufrolle (4b) des zweiten Laufrollenpaares.

2. Rollpalette nach Anspruch 1, dadurch gekennzeichnet, daß die Laufrollen (4b) des zweiten Rollenpaares Lenkrollen sind.

3. Rollpalette nach Anspruch 1 oder 2, dadurch gekennzeichnet, daß die Laufrollen (4a,4b) um ein Übermaß (Ü) mehr als die doppelte Höhe der Tragplatte (T) über deren untere Wandbegrenzung vorstehen und die Tragplatte (T) an ihrer Oberseite jeweils eine das Übermaß (Ü) aufweisende Vertiefung wenigstens oberhalb der Montagestellen der Laufrollen (4a,4b) haben.

4. Rollpalette nach einem der vorhergehenden Ansprüche, dadurch gekennzeichnet, daß die Tragplatte (T) aus Kunststoff besteht und an ihrer Unterseite durch eine Vielzahl von Rippen (3) ausgesteift ist.

5. Rollpalette nach Anspruch 4, dadurch gekennzeichnet, daß die Unterseite der Tragplatte (T) von einer wenigstens an ihrer Umfangswand (2) und an die Durchbrüche (6,7) einfassenden Wänden abgedichtet befestigten Abdeckplatte verschlossen ist und die Konsolen (5a,5b) der Laufrollen (4a,4b) an der Außenseite der Abdeckplatte befestigt sind.
